# EUROPÄISCHE PATENTSCHRIFT

(11) **EP 0 744 049 B1**
(45) Veröffentlichungstag und Bekanntmachung des Hinweises auf die Patenterteilung: **27.08.1997**
(21) Anmeldenummer: 95906891.7
(22) Anmeldetag: 25.01.1995
(51) Int. Cl.: G06F 7/00

(54) **ANORDNUNG ZUR GESONDERTEN BEHANDLUNG VON FUZZY-REGELN MIT UNTERSCHIELDLICHER WICHTIGKEIT**
ARRANGEMENT FOR SEPARATELY PROCESSING FUZZY RULES OF DIFFERING IMMPORTANCE
CONFIGURATION DESTINEE AU TRAITEMENT SEPARE DE REGLES D'IMPORTANCE VARIEE A LOGIQUE FLOUE

(30) Priorität: 11.02.1994 DE 4404426
(43) Veröffentlichungstag der Anmeldung: 27.11.1996
(73) Patentinhaber: SIEMENS AKTIENGESELLSCHAFT, 80333 München (DE)
(72) Erfinder: EICHFELD, Herbert, D-80538 München (DE); KÜNEMUND, Thomas, D-80337 München (DE)
(86) Internationale Anmeldenummer: DE9500115
(87) Internationale Veröffentlichungsnummer: WO9522099

(56) Entgegenhaltungen:
- DE-A- 4 225 758

## Beschreibung

Aufgrund der jeweiligen speziellen Gegebenheiten des zu lösenden regelungstechnischen Problems wird das linguistische Protokoll eines Fuzzy-Reglers bzw. eines Fuzzy-Controllers im allgemeinen Regeln unterschiedlicher Wichtigkeit enthalten. Diesem Umstand kann beispielsweise dadurch Rechnung getragen werden, daß jede Regel mit einem Skalierungsfaktor für die Wichtigkeit der jeweiligen Regel versehen wird. Diese vordergründige Lösung hat jedoch den gravierenden Nachteil, daß eine entsprechende Anordnung viel Speicherplatz erfordert und somit für Fuzzy-Controller Hardware mit on-chip-Speicher praktisch ungeeignet ist.

Aus der deutschen Zeitschrift atp-Automatisierungstechnische Praxis 34 (1992) 4, Seiten 176 bis 184 und 5, Seiten 239 bis 246 ist ein Fuzzy-Regler bekannt, bei dem Einzelbedingungen im WENN-Teil einer jeweiligen Regel durch unscharfe UND-Verknüpfungen in Form einer Minimum-Verknüpfung zu einer Gesamtbedingung und Ausgangswerte der DANN-Teile von Regeln durch unscharfe ODER-Verknüpfungen in Form eines Maximum-Verknüpfung zu einer Gesamtfolge verknüpft sind.

Aus der deutschen Offenlegungsschrift DE 42 25 758 A1 ist die Möglichkeit bekannt, daß Regelgruppen mit wichtigen und weniger wichtigen Regeln gebildet werden können und daß die wichtigen Regeln durch eine begrenzte Summenbildung und die weniger wichtigen Regeln durch eine Maximumbildung unscharf ODER-verknüpft werden können.

Die der Erfindung zugrundeliegende Aufgabe besteht nun darin, eine Anordnung anzugeben, bei der sichergestellt wird, daß zumindest jede wichtige (dominante) Regel, deren Bedingungsteil (WENN-Teil) erfüllt ist, einen Einfluß auf den scharfen Wert der jeweiligen Ausgangsvariablen hat und nicht, wie bei bekannten Fuzzy-Reglern, von weniger wichtigen Regeln mit eventuell höheren Zugehörigkeitsfunktionswerten vollständig "ausgeblendet" werden kann und bei der besonders wenig Speicherplatz und Steuerungsaufwand erforderlich ist.

Diese Aufgabe wird durch die Merkmale des Patentanspruchs erfindungsgemäß gelöst.

Der Vorteil der Erfindung besteht insbesondere darin, daß sich vor allem bei flexibel einsetzbaren Fuzzy-Controllern nur ein sehr geringer schaltungstechnischer Mehraufwand ergibt, da hierbei zur Realisierung einer unscharfen ODER-Verknüpfung, neben einer Einheit zur Maximumbildung, ohnehin mindestens eine weitere Einheit, wie beispielsweise eine Einheit zur Bildung einer begrenzten Summe, vorgesehen ist.

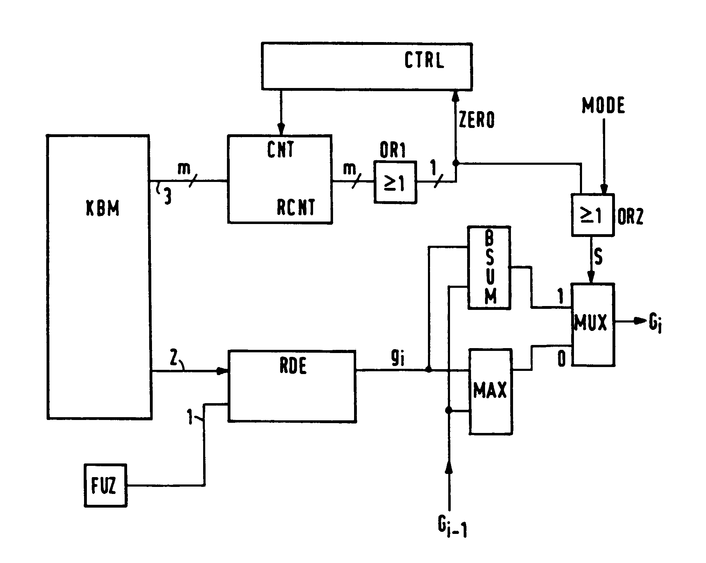

Die Erfindung wird im folgenden anhand der Zeichnung näher erläutert.

In der Zeichnung ist ein Blockschaltbild dargestellt, das einen Wissensbasisspeicher KBM, eine Fuzzifikationseinheit FUZ, eine Regeldekodier/Regelauswerte-Einheit RDE, eine Einheit BSUM zur Bildung einer begrenzten Summe, eine Einheit MAX zur Bildung eines Maximums, einen Multiplexer MUX sowie zwei ODER-Schaltungen OR1 und OR2 aufweist. Der Wissensbasisspeicher KBM kann dabei als externer Speicher oder aber auch als sogenannter on-Chip-Speicher eines Fuzzy-Controllers ausgebildet sein und enthält in kodierter Form das linguistische Protokoll eines Fuzzy-Reglers. Die genauere Funktion und der Aufbau der Fuzzifikationseinheit FUZ bzw. der Einheit RDE ist für die vorliegende Erfindung unwesentlich. Zum besseren Verständnis der Gesamtanordnung sei jedoch an dieser Stelle erwähnt, daß die Regeldekodier/Regelauswerte-Einheit RDE für eine Regel i ein Regelgewicht gᵢ aus Werten 1 der Fuzzifikationseinheit FUZ und Werten 2, die dem linguistischen Protokoll entsprechen und aus dem Wissensbasisspeicher KBM stammen, bildet.

Das Regelgewicht gᵢ entspricht dabei dem Wahrheitswert des WENN-Teils einer jeweiligen Regel i.

Zur Bildung der aggregierten Regelgewichte Gᵢ werden jeweils alle Regelgewichte Gᵢ von Regeln zusammengefaßt, die im DANN-Teil der jeweiligen Regel zum selben linguistischen Wert der Ausgangsvariablen führen, wobei das Zusammenfassen seriell, durch eine unscharfe ODER-Verknüpfung in Form einer Einheit (MAX) zur Bildung eines Maximums bzw. in Form einer Einheit (BSUM) zur Bildung einer begrenzten Summe erfolgt.

Die Regelgewichte gᵢ der einzelnen Regeln i werden auch bei Anordnungen, die keine gesonderte Behandlung von Fuzzy-Regeln mit unterschiedlicher Wichtigkeit zulassen durch eine unscharfe ODER-Verknüpfung zu einem aggregierten Regelgewicht Gᵢ zusammengefaßt, wobei dies in der Regel dadurch geschieht, daß ein jeweiliges Regelgewicht gᵢ mit einem jeweiligen vorhergehenden aggregierten Regelgewicht Gᵢ₋₁ zu einem jeweiligen neuen aggregierten Regelgewicht Gᵢ verknüpft wird, bis ein vollständig aggregiertes Regelgewicht Gᵢ vorliegt. Die unscharfe ODER-Verknüpfung wird in vielen Fällen in Form einer Maximum-Verknüpfung, kann aber auch durch andere Funktionen, wie beispielsweise eine begrenzte Summe, realisiert werden.

Unter einer Einheit zur Bildung einer begrenzten Summe ist allgemein gesprochen eine Einheit zu verstehen, an deren Ausgang die Summe der beiden Eingänge zur Verfügung steht, solange die Summe einen Grenzwert nicht überschreitet, und an deren Ausgang der Grenzwert anliegt, sofern die Summe größer als der Grenzwert ist.

Sind mehrere Einheiten zur Bildung einer unscharfen ODER-Verbindung vorgesehen, so sind diese beispielsweise durch den Multiplexer MUX auswählbar, wobei der Ausgang der jeweils ausgewählten Einheit auf den Multiplexerausgang abhängig von einem Steuersignal s durchgeschaltet wird.

Werden nun bei der erfindungsgemäßen Anordnung in dem Wissensbasisspeicher KBM die wichtigen und weniger wichtigen Regeln in getrennten Blöcken gespeichert und eine Ablaufsteuerung CTRL derart vorgesehen, daß der Block mit allen wichtigen Regeln zeitlich nach den weniger wichtigen Regeln adressiert wird, so genügt es, dem Rückwärtszähler RCNT bei der Verarbeitung der weniger wichtigen Regel den Wert Null und vor Verarbeitung der wichtigen Regeln an seinem Ladeeingang LD die im Wissensbasisspeicher KBM gespeicherte Anzahl der wichtigen Regeln zur Verfügung zu stellen und nach jeder Verarbeitung einer wichtigen Regel dem Zähleingang CNT des Rückwärtszählers einen Zählimpuls zuzuführen bis alle wichtigen Regeln verarbeitet sind.

Erst sind die aggregierten Regelgewichte der weniger wichtigen Regeln zu berechnen und zwischenzuspeichern und erst dann werden die Regelgewichte der wichtigen Regeln über die Einheit BSUM begrenzt aufsummiert. Bei umgekehrter Reihenfolge würde das vorhergehende aggregierte Regelgewicht Gᵢ₋₁ = 0 am Anfang sein und die Einheit BSUM würde nicht wirken.

Bei höchstens 2^{m}-1 wichtigen Regeln weist der Ladeeingang LD und der Ausgang des Rückwärtszählers RCNT die Wortbreite m auf. Sobald alle wichtigen Regeln verarbeitet sind, weist der Rückwärtszähler den Wert Null auf. Der Ausgang des Rückwärtszählers wird bitweise durch die ODER-Schaltung OR1 verknüpft, wodurch sich am Ausgang der ODER-Schaltung OR1 genau dann eine logische Null ergibt, wenn der Rückwärtszähler den Wert Null aufweist. Das Ausgangssignal ZERO der ODER-Schaltung OR1 wird in einer Ablaufsteuerung CTRL dazu benutzt, daß keine weiteren Zählimpulse für den Zähleingang CNT des Rückwärtszählers bereitstellt werden. Dies heißt mit anderen Worten, daß sobald das Ausgangssignal ZERO eine logische Null aufweist eine Verarbeitung der weniger wichtigen Regeln erfolgt.

Dieses Ausgangssignal der ODER-Schaltung OR1 kann nun auch zur Bildung des Steuersignals s für den Multiplexer MUX herangezogen werden und abhängig davon, ob eine wichtige oder eine weniger wichtigere Regel vorliegt, entweder die Einheit zur Bildung einer begrenzten Summe oder die Einheit zur Maximumbildung zur unscharfen ODER-Verknüpfung verwendet werden. Dabei ist von wesentlicher Bedeutung, daß die wichtigen Regeln mit Hilfe der Einheit zur Bildung einer begrenzten Summe und die weniger wichtigen Regeln mit Hilfe der Einheit zur Maximumbildung unscharf ODER-verknüpft werden.

Ist neben der Steuerung des Multiplexers aufgrund der Wichtigkeit der Regeln zusätzlich eine gezielte Steuerung des Multiplexers MUX gewünscht, so ist wie in der Zeichnung dargestellt eine zweite ODER-Schaltung OR2 erforderlich, deren Ausgang das Steuersignal s liefert, deren erster Eingang mit dem Ausgang der ODER-Schaltung OR1 verbunden ist und deren zweiter Eingang ein externes Auswahlsignal MODE erhält.

Die Anordnung eignet sich prinzipiell für jeden Fuzzy-Controller, jedoch insbesondere für flexible Fuzzy-Controller Hardware, bei der ohnehin mehrere Möglichkeiten zur unscharfen ODER-Verknüpfung vorgesehen sind und die einen on-Chip-Speicher für das linguistische Protokoll aufweist.

## Patentansprüche

1. Anordnung zur gesonderten Verarbeitung von Fuzzy-Regeln mit unterschiedlicher Wichtigkeit,
- bei der in einem Wissensbasisspeicher (KBM) wichtige und weniger wichtige Regeln von einander unterscheidbar gespeichert sind,
- bei der aus einem Regelgewicht (gᵢ) einer jeweiligen Regel (i) und aus einem aggregierten Regelgewicht (Gᵢ₋₁) von vorhergehenden Regeln (0..i-1) mit Hilfe einer Einheit (BSUM, MAX) zur Bildung einer unscharfen ODER-Verknüpfung ein neues aggregiertes Regelgewicht (Gᵢ) gebildet ist und
- bei der die Einheit zur Bildung einer unscharfen ODER-Verknüpfung eine Einheit (BSUM) zur Bildung einer begrenzten Summe ist, sofern eine wichtige Regel vorliegt, und eine Einheit (MAX) zur Bildung eines Maximums ist, sofern eine weniger wichtige Regel vorliegt, und
- bei der ein Eins-Eingang eines Multiplexers (MUX) mit dem Ausgang der Einheit (BSUM) zur Bildung der begrenzten Summe und ein Null-Eingang des Multiplexers mit dem Ausgang der Einheit (MAX) zur Bildung eines Maximums verbunden ist und
**dadurch gekennzeichnet,**
- daß eine Steuerung (CTRL) derart vorgesehen ist, daß im Wissensbasisspeicher (KBM) alle wichtigen Regeln in einem Block zeitlich nach den weniger wichtigen Regeln adressiert werden,
- daß einem Ladeeingang (LD) eines Rückwärtszahlers (RCNT) die im Wissensbasisspeicher gespeicherte Anzahl (3) der wichtigen Regeln zugeführt ist und die Steuerung nach der Verarbeitung einer jeweiligen Regel ein Signal an einen Zähleingang (CNT) des Rückwärtszählers liefert, bis alle wichtigen Regeln verarbeitet sind,
- daß das Ausgangssignal des Rückwärtszählers bitweise ODER-verknüpft (OR1) ist und als Steuersignal (s) für den Multiplexer (MUX) dient und
- daß jeweils an einem Eingang beider Einheiten (BSUM,MAX) das jeweilige Regelgewicht (gᵢ) und jeweils an einem weiteren Eingang beider Einheiten das vorhergehende aggregierte Regelgewicht (Gᵢ₋₁) ansteht.

## Claims

1. An arrangement for the separate processing of fuzzy rules of differing importance,
- in which, in a knowledge base memory (KBM), important and less important rules are stored such that they can be distinguished from one another,
- in which, from a rule weighting (gᵢ) of a respective rule (i) and from an aggregated rule weighting (Gᵢ₋₁) of previous rules (0..i-1), with the aid of a unit (BSUM, MAX) for forming an unsharp OR link, a new aggregated rule weighting (Gᵢ) is formed and
- in which the unit for forming an unsharp OR link is a unit (BSUM) for forming a limited sum, if an important rule is present, and is a unit (MAX) for forming a maximum, if a less important rule is present, and
- in which a one input of a multiplexer (MUX) is connected to the output of the unit (BSUM) for forming the limited sum and a zero input of the multiplexer is connected to the output of the unit (MAX) for forming a maximum, and
characterized
- in that a controller (CTRL) is provided such that, in the knowledge base memory (KBM), all the important rules in one block are addressed chronologically after the less important rules,
- in that a load input (LD) of a reverse counter (RCNT) is fed the number (3), stored in the knowledge base memory, of the important rules, and the controller, after the processing of a respective rule, supplies a signal to a counting input (CNT) of the reverse counter until all the important rules have been processed,
- in that the output signal of the reverse counter is OR linked (OR1) bit by bit and serves as control signal (s) for the multiplexer (MUX), and
- in that there is in each case at one input of both units (BSUM, MAX) the respective rule weighting (gᵢ) and there is in each case at a further input of both units the previous aggregated rule weighting (Gᵢ₋₁).

## Revendications

1. Configuration destinée au traitement séparé de règles à logique floue d'importance variée,
- dans laquelle des règles importantes et moins importantes sont stockées de façon distincte dans une mémoire de base de connaissances (KBM),
- dans laquelle à partir d'un poids de règle (gᵢ) d'une règle (i) respective et à partir d'un poids de règle agrégé (Gᵢ₋₁) de règles (0..i-1) précédentes est formé un nouveau poids de règle agrégé (Gᵢ) à l'aide d'une unité (BSUM, MAX) pour obtenir une combinaison OU floue,
- dans laquelle l'unité pour obtenir une combinaison OU floue est une unité (BSUM) pour obtenir une somme limitée si une règle importante est présente et est une unité (MAX) pour obtenir un maximum si une règle moins importante est présente, et
- dans laquelle une entrée un d'un multiplexeur (MUX) est reliée à la sortie de l'unité (BSUM) pour obtenir la somme limitée et une entrée Null du multiplexeur est reliée à la sortie de l'unité (MAX) pour obtenir un maximum, et
qui est caractérisée
- en ce qu'une commande (CTRL) est prévue de telle façon que dans la mémoire de base de connaissances (KBM) toutes les règles importantes sont adressées chronologiquement en un bloc après les règles moins importantes,
- en ce que le nombre (3) des règles importantes stockées dans la mémoire de base de connaissances est amené à l'entrée de chargement (LD) d'un décompteur (RCNT) et en ce que la commande produit un signal au niveau d'une entrée de comptage (CNT) du décompteur après le traitement d'une règle particulière, jusqu'à ce que toutes les règles importantes soient traitées,
- en ce que le signal de sortie du décompteur est combiné bit par bit par une liaison OU (OR1) et sert en tant que commande pour le multiplexeur (MUX), et
- en ce que le poids de règle (gᵢ) respectif est appliqué à une entrée des deux unités (BSUM, MAX) et en ce que le poids de règle agrégé précédent (Gᵢ₋₁) est appliqué à une autre entrée de ces deux unités.
